# EUROPEAN PATENT SPECIFICATION

(11) **EP 2 554 446 B1**
(45) Date of publication and mention of the grant of the patent: **12.02.2020**
(21) Application number: 11765314.7
(22) Date of filing: 11.03.2011
(51) Int. Cl.: B60T 17/18, B60T 8/171, B60T 8/1761, B60T 8/17, B60T 8/88

(54) **WHEEL SPEED SENSOR MONITORING DEVICE AND METHOD**
VORRICHTUNG UND VERFAHREN ZUR ÜBERWACHUNG EINER RADGESCHWINDIGKEIT
DISPOSITIF ET PROCÉDÉ DE SURVEILLANCE DE CAPTEUR DE VITESSE DE ROUE

(30) Priority: 02.04.2010 JP 2010086230
(43) Date of publication of application: 06.02.2013
(73) Proprietor: Bosch Corporation, Tokyo 150-8360 (JP)
(72) Inventor: ONO, Shunsaku, Yokohama-shi Kanagawa 224-8501 (JP)
(74) Representative: DREISS Patentanwälte PartG mbB
(86) International application number: PCT/JP2011/055734
(87) International publication number: WO 2011/125412

(56) References cited:
- EP-A1- 0 024 838
- EP-A1- 1 227 019
- EP-A2- 1 531 101
- DE-A1- 19 622 462
- JP-A- 2004 314 795
- JP-A- 2006 327 474
- JP-A- 2008 213 512
- US-A- 5 612 879

## Description

### TECHNICAL FIELD

The present invention relates to a device and a method for monitoring a speed sensor installed in a vehicle and more particularly relates to a device and a method for monitoring a wheel speed sensor installed in a two-wheeled motor vehicle.

### BACKGROUND ART

A conventional anti-lock braking system (ABS) is, as described in patent document 1, equipped with plural wheel speed sensors, monitors wheel speeds by comparing the outputs of these sensors to each other, and is operated in accordance with the monitored wheel speeds.

Further, a one-channel ABS such as shown in FIG. 1 of patent document 2 is equipped with only one wheel speed sensor on one wheel on which ABS control is performed. EP 0 024 838 A1 discloses signal or data processing system failure warning means for a vehicle. DE 196 22 462 A1 and EP 1 531 101 A2 disclose further aspects of such systems.

However, in one-channel ABS that has only one wheel speed sensor, when the wheel speed sensor is faulty or the like, detection by the electronic control unit (ECU) of the vehicle and notification with respect to the driver become a problem.

### RELATED ART DOCUMENTS

### PATENT DOCUMENTS

Patent Document 1: JP-A-2006-327474
Patent Document 2: JP-A-2008-254733

### SUMMARY OF INVENTION

### PROBLEMS TO BE SOLVED BY THE INVENTION

In a case where, in a one-channel ABS equipped with only one wheel speed sensor, the output from the wheel speed sensor disappears, the ECU cannot judge whether the vehicle is currently stopped or whether the speed sensor is abnormal. For that reason, even after having been able to confirm that the wheel speed is normal at the time of initial take-off, the driver cannot recognize the occurrence of an abnormality at a time when the vehicle is stopped. Even if the vehicle are to travel in this abnormal state and the wheels are to slip, the ABS would not operate.

Therefore, it is an object of the present invention to provide a monitoring device and method that can, even after having been able to confirm that wheel speed is normal at the time of initial take-off in such an ABS, monitor the possibility that a wheel speed sensor is faulty and warn or notify a driver of this.

### MEANS FOR SOLVING THE PROBLEMS

In order to solve this problem, the present invention provides a wheel speed sensor monitoring device according to claim 1 used
in a two-wheeled motor vehicle, with the two-wheeled motor vehicle being equipped with a wheel speed sensor that detects a wheel speed of one wheel, a control unit that finds a vehicle body speed from the wheel speed and uses the wheel speed to perform ABS control of the wheel, and an indicator that indicates the state of the vehicle body, wherein the control unit gives a notification, with the indicator, that the vehicle body speed or the wheel speed is equal to or less than a predetermined minimum speed. The control unit operates the indicator by any one of causing it to light up, causing it to flash, or changing its indication color when it is lit up or flashing. The predetermined minimum speed is Oto 7 km/h. The control unit monitors the wheel speed sensor after initial take-off of the two-wheeled motor vehicle and determines whether or not the vehicle body speed or the wheel speed is equal to or less than the predetermined minimum speed. The control unit determines whether or not an additional signal pertaining to the state of the vehicle body indicates a stopped state of the vehicle, and in a case where the additional signal indicates a stopped state of the vehicle, even if the vehicle body speed or the wheel speed is equal to or less than the predetermined minimum speed after the initial take-off, the indicator does not give a notification that the vehicle body speed or the wheel speed is equal to or less than the predetermined minimum speed. In the monitoring device, the predetermined minimum speed monitored at the time of the initial take-off is a first minimum speed and the predetermined minimum speed monitored after the initial take-off is a second minimum speed differing from the first minimum speed. The first minimum speed is equal to or greater than the second minimum speed. The indicator is an ABS warning light.

Moreover, the present invention provides a wheel speed sensor monitoring method according to claim 8 used in a two-wheeled motor
vehicle, with the two-wheeled motor vehicle being equipped with a wheel speed sensor that detects a wheel speed of one wheel, a control unit that finds a vehicle body speed from the wheel speed and uses the wheel speed to perform ABS control of the wheel, and an indicator that indicates the state of the vehicle body, wherein the monitoring method includes a step of giving a notification, with the indicator, that the vehicle body speed or the wheel speed is equal to or less than a predetermined minimum speed. The monitoring method includes a step of operating the indicator by any one of causing it to light up, causing it to flash, or changing its indication color when it is lit up or flashing. The predetermined minimum speed is 0 to 7 km/h. The monitoring method includes a step of monitoring the wheel speed sensor after initial take-off of the two-wheeled motor vehicle and a step of determining whether or not the vehicle body speed or the wheel speed is equal to or less than the predetermined minimum speed. The monitoring method includes a step of determining whether or not an additional signal pertaining to the state of the vehicle body indicates a stopped state of the vehicle and a step where, in a case where the additional signal indicates a stopped state of the vehicle, even if the vehicle body speed or the wheel speed is equal to or less than the predetermined minimum speed after the initial take-off, the indicator does not give a notification that the vehicle body speed or the wheel speed is equal to or less than the predetermined minimum speed. In the monitoring method, the predetermined minimum speed monitored at the time of the initial take-off is a first minimum speed and the predetermined minimum speed monitored after the initial take-off is a second minimum speed differing from the first minimum speed. The first minimum speed is equal to or greater than the second minimum speed. The indicator is an ABS warning light.

### ADVANTAGE OF THE INVENTION

According to the device and the method of the present invention, a wheel speed sensor for monitoring or wheel speed information becomes unnecessary, and even in a case where the ABS is equipped with only one wheel speed sensor, it becomes possible for the driver to recognize the possibility that the wheel speed sensor is faulty or the non-operation of the ABS.

### BRIEF DESCRIPTION OF THE DRAWINGS

FIG. 1 is a block diagram pertaining to a monitoring device of an embodiment of the present invention;
FIG. 2 is a flowchart pertaining to the monitoring device of the embodiment of the present invention; and
FIG. 3(a) is a graph showing time changes with respect to wheel speed in the monitoring device of the embodiment of the present invention, FIG. 3(b) is a graph showing time changes with respect to the switching on and off of an ignition in the monitoring device of the embodiment of the present invention, and FIG. 3(c) is a graph showing time changes with respect to the switching on and off of a warning light in the monitoring device of the embodiment of the present invention.

### MODE FOR CARRYING OUT THE INVENTION

The wheel speed sensor monitoring device and method of the present invention cause a warning light to light up or flash in a later-described stopped state and issue a warning or a notification to a driver even after having been able to confirm that wheel speed is normal at the time of initial take-off. An embodiment where the wheel speed sensor monitoring device and method of the present invention are applied to a two-wheeled motor vehicle will be described below with reference to the drawings.

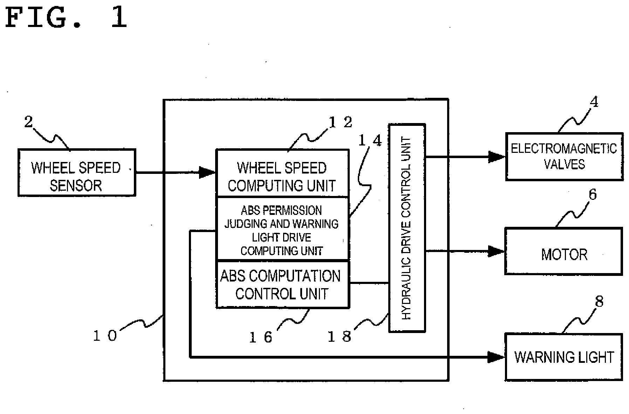

An electronic control unit (ECU) 10 that configures the monitoring device of the present embodiment will be described using the block diagram of FIG. 1. One wheel speed sensor 2, electromagnetic valves 4, a motor 6, and a warning light 8 are connected to the ECU 10. The wheel speed sensor 2 is disposed on a front wheel or a rear wheel (not shown in the drawings) on which ABS control is performed and outputs a signal based on the wheel rotational speed. The electromagnetic valves 4 are disposed in a plurality in a hydraulic circuit and open and close on the basis of control signals from the ECU 10 at the time of ABS operation. The motor 6 pressurizes hydraulic fluid in the hydraulic circuit on the basis of a control signal from the ECU 10 at the time of ABS operation. The warning light (indicator) 8 performs any one operation of lighting up, flashing, or changing its indication color when it is lit up or flashing on the basis of a control signal from the ECU 10 to notify the driver of an abnormality or the like.

Further, a wheel speed computing unit 12, an ABS permission judging and warning light drive computing unit 14, and an ABS computation control unit 16 are disposed in the ECU 10.

The wheel speed computing unit 12 computes the wheel speed on the basis of the speed signal that the wheel speed sensor 2 has outputted. The ABS permission judging and warning light drive computing unit 14 judges permitting the operation of the ABS and decides the drive indication state of the warning light on the basis of the wheel speed that the wheel speed computing unit 12 has found. The ABS computation control unit 16 computes the operating state of the ABS. Moreover, a hydraulic drive control unit 18 controls the driving of the electromagnetic valves 4 in the hydraulic circuit and the motor 6 on the basis of commands of the ABS computation control unit 16.

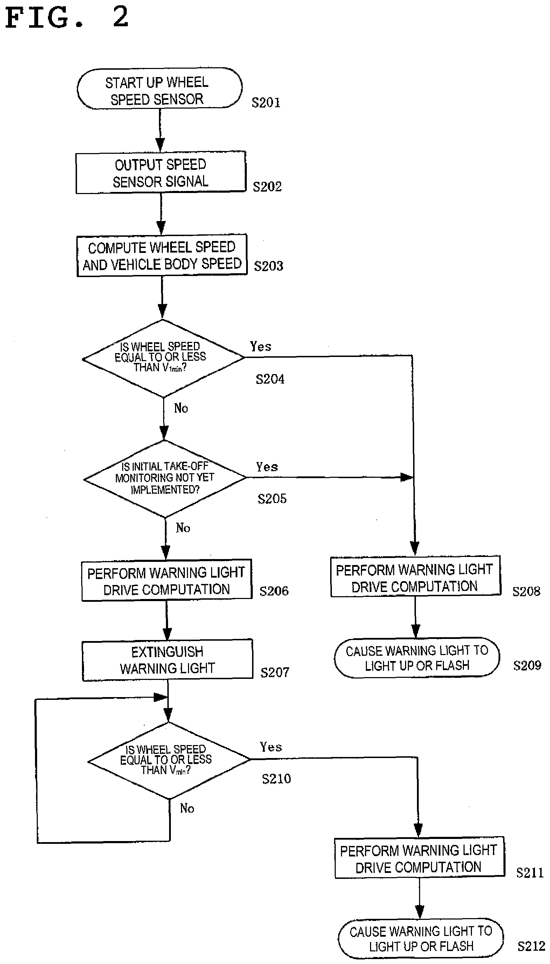

The operation of the monitoring device and method pertaining to the present embodiment will be described on the basis of the flowchart of FIG. 2. When the ignition of the two-wheeled motor vehicle is switched on, in step S201 the wheel speed sensor 2 starts up and in step S202 the wheel speed sensor 2 outputs the signal to the ECU 10. In step S203 the wheel speed computing unit 12 computes the wheel speed on the basis of the inputted signal and also computes the vehicle body speed on the basis of the wheel speed.

Next, in step S204, the ABS permission judging and warning light drive computing unit 14 determines whether or not the wheel speed is equal to or less than a minimum speed V₁ₘᵢₙ for implementing initial take-off monitoring. The ABS permission judging and warning light drive computing unit 14 moves to step S208 in a case where the wheel speed is equal to or less than V₁ₘᵢₙ and moves to step S205 in a case where the wheel speed is not equal to or less than V₁ₘᵢₙ. A case where the wheel speed is equal to or less than the minimum speed for implementing initial take-off monitoring is a case where the vehicle body speed that has been computed on the basis of the signal from the wheel speed sensor 2 can be regarded as substantially zero. The minimum speed for implementing initial take-off monitoring can be set to 1 to 7 km/h, for example, and preferably can be set to 5 km/h.

In step S205 the ABS permission judging and warning light drive computing unit 14 determines whether or not initial take-off monitoring is not yet implemented. The ABS permission judging and warning light drive computing unit 14 moves to step S208 in a case where initial take-off monitoring is not yet implemented and moves to step S206 in a case where initial take-off monitoring is not not-yet-implemented, that is, a case where initial take-off monitoring has already been implemented.

In step S206 the ABS permission judging and warning light drive computing unit 14 performs warning light drive computation. In step S207 the ABS permission judging and warning light drive computing unit 14 extinguishes the warning light and then moves to step S210. The state in step S207 is an ordinary traveling state. On the other hand, in step S208 the ABS permission judging and warning light drive computing unit 14 performs warning light drive computation, and in step S209 it causes the warning light to light up or flash. This means that in step S209 the state is being judged as an actual stopped state or a stopped state even though the vehicle is traveling.

After the ABS permission judging and warning light drive computing unit 14 has extinguished the warning light in step S207. the vehicle enters a traveling state, and in step S210 the ABS permission judging and warning light drive computing unit 14 judges whether or not the wheel speed is equal to or less than a minimum speed Vₘᵢₙ for traveling. A case where the wheel speed is equal to or less than the minimum speed for traveling is a case where the vehicle body speed that has been computed on the basis of the signal from the wheel speed sensor 2 can be regarded as substantially zero. The minimum speed for traveling can be set to 1 to 7 km/h, for example, and preferably can be set to 3 km/h. Regarding the relationship between V₁ₘᵢₙ and Vₘᵢₙ, it is preferred that V₁ₘᵢₙ ≥ Vₘᵢₙ, The reason for this is that at the time of the initial take-off, confirmation of the operation of the system itself such as, for example, confirmation resulting from the driving of valves and a pump motor in addition to wheel speed is also performed, so if the minimum speed V₁ₘᵢₙ for implementing initial take-off monitoring is too low, the driving sounds and the vibration of the valves and the motor become a preoccupation or there is the possibility that misdetection of low voltage will occur because the engine speed is too low and the supplied voltage is insufficient. In order to prevent these, a V₁ₘᵢₙ that is greater to a certain extent compared to Vₘᵢₙ is set.

In a case where the wheel speed is not equal to or less than the minimum speed Vₘᵢₙ for traveling in step S210, the ABS permission judging and warning light drive computing unit 14 returns to step S210, and in a case where the wheel speed is equal to or less than the minimum speed Vₘᵢₙ for traveling in step S210, the ABS permission judging and warning light drive computing unit 14 moves to step S211. In step S211 the ABS permission judging and warning light drive computing unit 14 performs warning light drive computation in step S211, and in step S212 it causes the warning light to light up or flash. This means that in step S212 the state is being judged as an actual stopped state or a stopped state even though the vehicle is traveling.

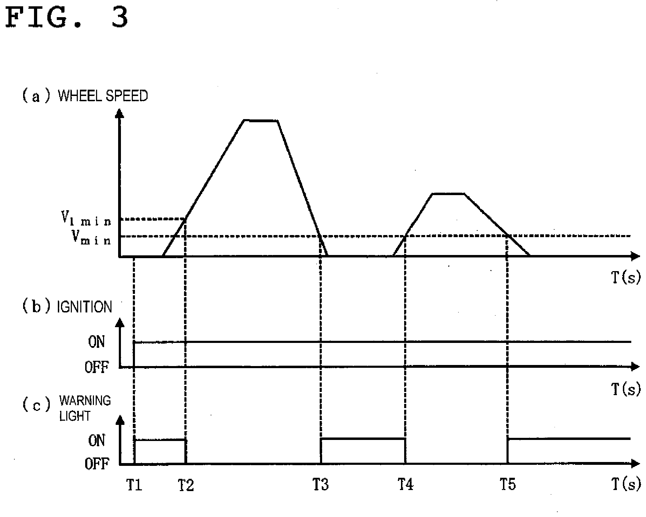

The state at the time of operation of the monitoring device and method of the present embodiment will be described on the basis of the graph in FIG. 3. FIG. 3(a) shows time changes in the wheel speed computed from the signal from the wheel speed sensor. FIG. 3(b) shows time changes in on and off states of the ignition. FIG. 3(c) shows time changes in on and off (lit up and extinguished) states of the warning light.

Time T1 in FIG. 3 is a stopped state before initial take-off, that is, a state in which the engine is stopped at a time when the vehicle is stopped and the ignition is switched on for take-off, and the warning light is lit up. Consequently, the wheel speed of the wheel speed sensor is 0, which represents a stopped state of the vehicle. Until time T2, the warning light continues to remain in an on state from time T1 and the wheel speed is equal to or less than the minimum speed V₁ₘᵢₙ for implementing initial take-off monitoring, but in actuality the vehicle is starting to move at a low speed. At time T2, when the vehicle accelerates and the vehicle body speed becomes greater than the speed V₁ₘᵢₙ, initial take-off monitoring is implemented and the warning light goes off if the wheel speed is normal. From time T2 to time T3, the wheel speed first rises and thereafter falls, and when the wheel speed becomes equal to or less than the minimum speed Vₘᵢₙ for traveling, the warning light lights up or flashes. Time T3 to time T4 is a state in which the vehicle is stopped, such as when waiting at a traffic signal, for example, and the ignition is on and the vehicle is stopped. Because the vehicle is stopped, the wheel speed is equal to or less than the minimum speed Vₘᵢₙ for traveling and the warning light lights up or flashes. Then, at time T4, the warning light goes off when the vehicle takes off again and the wheel speed becomes greater than Vₘᵢₙ, Time T4 to time T5 is a traveling state and the warning light stays off. Then, when the wheel speed becomes equal to or less than the minimum speed Vₘᵢₙ for traveling at time T5, the warning light lights up or flashes. If in this state the computed wheel speed is equal to or less than the minimum speed Vₘᵢₙ for traveling due to the wheel speed sensor being faulty or the like, the warning light stays lit up or keeps flashing even when the vehicle is actually traveling.

The monitoring device of the present invention can confirm that the wheel speed sensor is normal at initial take-off, and even if the monitoring device has extinguished the warning light, in a case where the signal is no longer outputted from the wheel speed sensor thereafter, the monitoring device causes the warning light to light up or flash all the time. Even if the monitoring device has been able to confirm that the wheel speed sensor is normal at initial take-off, at a time when the vehicle stops thereafter, the monitoring device again causes the ABS warning light to light up or extinguishes the ABS warning light (prohibits the operation of the ABS) and issues a warning to the driver. When the monitoring device is able to confirm again that the wheel speed sensor is normal after the vehicle takes off again (when a speed exceeding a predetermined minimum speed is outputted), the monitoring device again extinguishes the warning light and makes operation of the ABS possible.

In the present invention, an ordinary warning light may be used or a dedicated warning light may be disposed. The warning light may be configured by causing an ABS operation indicating light to light up, causing it to flash, and changing its indication color. Moreover, in a case where there is an input of additional speed information such as the wheel speed from outside the ABS and that information is valid and indicates a stopped state of the vehicle, the monitoring device may be configured in such a way that it does not again cause the warning light to light up or flash and so forth at a time when the vehicle is stopped. As other additional speed information, the rotational speed of the axle of the wheel, a speedometer-use signal, and a drive system signal (engine speed, clutch signal in a state in which the clutch is engaged) can be used.

In a case during ABS control, the monitoring device may be configured in such a way as to give a notification, with the indicator, in a case where a state in which the wheel speed is equal to or less than the minimum speed for traveling is equal to or greater than a given amount of time (e.g., 1 to 2 seconds).

The vehicle body speed is computed from the wheel speed, but a filter for computing wheel speed or a wheel speed amount-of-change gradient limit is disposed, and during ABS control usually the filter or the like is firmly set. Thus, in the two-wheeled motor vehicle having a one-channel ABS (equipped with only one wheel speed sensor on one wheel on which ABS control is performed) to which the present invention is applied, cases where the vehicle body speed does not equal the wheel speed arise particularly during ABS control. By giving a notification with the indicator that the vehicle body speed is equal to or less than the predetermined minimum speed, it can be ensured that a notification is not given with the indicator if slip occurs in the wheel and the vehicle body speed is higher than the minimum speed even if it becomes equal to or less than the minimum speed for a short time. Consequently, the present invention has advantages for both wheel speed dependency and vehicle body speed dependency.

Options for the warning indication by the warning light 8 include: (1) causing the ABS warning light to flash when the wheel speed is equal to or less than the minimum speed V₁ₘᵢₙ and/or Vₘᵢₙ and switching the ABS warning light to a lit state when it has been judged that the wheel speed sensor is faulty; (2) changing the color of the ABS warning light 8 to one color when the wheel speed is equal to or less than the minimum speed V₁ₘᵢₙ and/or Vₘᵢₙ and another color when the ABS is faulty; and (3) separately disposing, outside the ABS warning light 8, an indicating means such as an indicating light that indicates a case where the wheel speed is equal to or less than the minimum speed V₁ₘᵢₙ and/or Vₘᵢₙ.

The "predetermined minimum speed" in the claims means the minimum speed V₁ₘᵢₙ for implementing initial take-off monitoring and/or the minimum speed Vₘᵢₙ for traveling.

### DESCRIPTION REFERENCE NUMERALS AND SIGNS

2 Wheel Speed Sensor
4 Electromagnetic Valves
6 Motor
8 Warning Light
10 ECU (Monitoring Device)
12 Wheel Speed Computing Unit
14 ABS Permission Judging and Warning Light Drive Computing Unit
16 ABS Computation Control Unit
18 Hydraulic Drive Control Unit

## Claims

1. A wheel speed sensor monitoring device (10) used in a two-wheeled motor vehicle, the two-wheeled motor vehicle comprising: a wheel speed sensor (2) that detects a wheel speed of one wheel; a control unit (10) that finds a vehicle body speed from the wheel speed and uses the wheel speed to perform ABS control of the wheel, and
an indicator (8) that indicates a state of the ABS control,
wherein:
the indicator (8) is configured so as to give a notification, when the control unit (10) determines to prohibit the ABS control;
the control unit (10) is configured so as to determine to prohibit the ABS control in accordance with the vehicle body speed or the wheel speed;
**characterized in that** the control unit (10) determines to prohibit the ABS control, in a case that the vehicle body speed or the wheel speed is equal to or less than a predetermined minimum speed at the initial take-off of the two-wheeled motor vehicle; and
the control unit (10) determines to prohibit the ABS control, in a case that the vehicle body speed or the wheel speed is equal to or less than a predetermined minimum speed after the initial take-off of the two-wheeled motor vehicle.

2. The wheel speed sensor monitoring device (10) according to claim 1, wherein the control unit (10) operates the indicator (8) by anyone of causing it to light up, causing it to flash, or changing its indication color when it is lit up or flashing.

3. The wheel speed sensor monitoring device (10) according to claim 1, wherein the predetermined minimum speed is 0 to 7 km/h.

4. The wheel speed sensor monitoring device (10) according to claim 1, wherein the control unit (10) determines whether or not an additional signal pertaining to a state of the vehicle body indicates a stopped state of the vehicle, and in a case where the additional signal indicates a the stopped state of the vehicle, even if the vehicle body speed or the wheel speed is equal to or less than the predetermined minimum speed after the initial take-off, the control unit (10) determines to allow the ABS control.

5. The wheel speed sensor monitoring device (10) according to claim 1, wherein the predetermined minimum speed monitored at the time of the initial take-off is a first minimum speed and the predetermined minimum speed monitored after the initial take-off is a second minimum speed differing from the first minimum speed.

6. The wheel speed sensor monitoring device (10) according to claim 5, wherein the first minimum speed is greater than the second minimum speed.

7. The wheel speed sensor monitoring device (10) according to claim 1, wherein the indicator (8) is a warning light.

8. A wheel speed sensor monitoring method used in a two-wheeled motor vehicle, the two-wheeled motor vehicle comprising: a wheel speed sensor (2) that detects (S203) a wheel speed of one wheel; a control unit (10) that finds (S203) a vehicle body speed from the wheel speed and uses the wheel speed to perform ABS control of the wheel, and
an indicator (8) that indicates (S212) a state of the ABS control,
wherein:
the indicator (8) is configured so as to give a notification, when the control unit (10) determines to prohibit the ABS control; and
the control unit (10) is configured so as to determine to prohibit the ABS control in accordance with the vehicle body speed or the wheel speed;
wherein the monitoring method is **characterized by** determining to prohibit the ABS control, in a case that the vehicle body speed or the wheel speed is equal to or less than a predetermined minimum speed at the initial take-off of the two-wheeled motor vehicle; and
determining to prohibit the ABS control, in a case that the vehicle body speed or the wheel speed is equal to or less than a predetermined minimum speed after the initial take-off of the two-wheeled motor vehicle.

9. The monitoring method according to claim 8, wherein the monitoring method includes: operating the indicator (8) by anyone of causing it to light up, causing it (S212) to flash, or changing its indication color when it is lit up or flashing.

10. The monitoring method according to claim 8, wherein the predetermined minimum speed is 0 to 7 km/h.

11. The wheel speed sensor monitoring method according to claim 8, wherein the monitoring method includes:
determining whether or not an additional signal pertaining to a state of the vehicle body indicates a stopped state of the vehicle; and
determining to allow the ABS control, in a case where the additional signal indicates a the stopped state of the vehicle, even if the vehicle body speed or the wheel speed is equal to or less than the predetermined minimum speed after the initial take-off.

12. The wheel speed sensor monitoring method according to claim 8, wherein the predetermined minimum speed monitored at the time of the initial take-off is a first minimum speed and the predetermined minimum speed monitored after the initial take-off is a second minimum speed differing from the first minimum speed.

13. The wheel speed sensor monitoring method according to claim 12, wherein the first minimum speed is greater than the second minimum speed.

14. The monitoring method according to claim 8, wherein the indicator (8) is a warning light.

## Patentansprüche

1. Raddrehzahl-Überwachungsvorrichtung (10) zur Verwendung in einem Zweirad-Kraftfahrzeug, wobei das Zweirad-Kraftfahrzeug Folgendes umfasst: einen Raddrehzahlsensor (2), der eine Raddrehzahl eines Rades detektiert,
eine Steuereinheit (10), die anhand der Raddrehzahl eine Geschwindigkeit einer Fahrzeugkarosserie ermittelt und die Raddrehzahl verwendet, um die ABS-Steuerung des Rades auszuführen, und
eine Anzeigevorrichtung (8), die einen Status der ABS-Steuerung anzeigt,
wobei:
die Anzeigevorrichtung (8) dazu dient, eine Anzeige auszugeben, wenn die Steuereinheit (10) bestimmt, dass die ABS-Steuerung verhindert werden soll;
die Steuereinheit (10) dazu dient, entsprechend der Fahrzeugkarosseriegeschwindigkeit oder der Raddrehzahl zu bestimmen, dass die ABS-Steuerung verhindert werden soll;
**dadurch gekennzeichnet, dass**
die Steuereinheit (10) bestimmt, dass die ABS-Steuerung verhindert werden soll, wenn die Fahrzeugkarosseriegeschwindigkeit oder die Raddrehzahl gleich oder kleiner ist als eine vorgegebene Mindestgeschwindigkeit beim ersten Start des Zweirad-Kraftfahrzeugs; und
dass die Steuereinheit (10) bestimmt, dass die ABS-Steuerung verhindert werden soll, wenn die Fahrzeugkarosseriegeschwindigkeit oder die Raddrehzahl gleich oder kleiner ist als eine vorgegebene Mindestgeschwindigkeit nach dem ersten Start des Zweirad-Kraftfahrzeugs.

2. Raddrehzahl-Überwachungsvorrichtung (10) nach Anspruch 1, wobei die Steuereinheit (10) die Anzeigevorrichtung (8) betätigt, indem sie bewirkt, dass sie aufleuchtet, dass sie blinkt oder dass sie ihre Anzeigefarbe ändert, wenn sie leuchtet oder blinkt.

3. Raddrehzahl-Überwachungsvorrichtung (10) nach Anspruch 1, wobei die vorgegebene Mindestgeschwindigkeit 0 bis 7 km/h beträgt.

4. Raddrehzahl-Überwachungsvorrichtung (10) nach Anspruch 1, wobei die Steuereinheit (10) bestimmt, ob ein zusätzliches, einen Zustand der Fahrzeugkarosserie betreffendes Signal einen Stoppzustand des Fahrzeugs anzeigt, und, wenn das zusätzliche Signal den Stoppzustand des Fahrzeugs anzeigt, bestimmt die Steuereinheit (10), dass die ABS-Steuerung ermöglicht wird, auch wenn die Fahrzeugkarosseriegeschwindigkeit oder die Raddrehzahl gleich oder kleiner ist als die vorgegebene Mindestgeschwindigkeit nach dem ersten Start.

5. Raddrehzahl-Überwachungsvorrichtung (10) nach Anspruch 1, wobei die vorgegebene Mindestgeschwindigkeit, die zum Zeitpunkt des ersten Starts überwacht wird, eine erste Mindestgeschwindigkeit ist, und die vorgegebene Mindestgeschwindigkeit, die nach dem ersten Start überwacht wird, eine zweite Mindestgeschwindigkeit ist, die sich von der ersten Mindestgeschwindigkeit unterscheidet.

6. Raddrehzahl-Überwachungsvorrichtung (10) nach Anspruch 5, wobei die erste Mindestgeschwindigkeit höher ist als die zweite Mindestgeschwindigkeit.

7. Raddrehzahl-Überwachungsvorrichtung (10) nach Anspruch 1, wobei die Anzeigevorrichtung (8) eine Warnleuchte ist.

8. Verfahren zur Überwachung einer Raddrehzahl zur Anwendung in einem Zweirad-Kraftfahrzeug, wobei das Zweirad-Kraftfahrzeug Folgendes umfasst: einen Raddrehzahlsensor (2), der eine Raddrehzahl eines Rades detektiert (S203);
eine Steuereinheit (10), die anhand der Raddrehzahl eine Geschwindigkeit einer Fahrzeugkarosserie ermittelt (S203) und die Raddrehzahl verwendet, um die ABS-Steuerung des Rades auszuführen, und
eine Anzeigevorrichtung (8), die einen Status der ABS-Steuerung anzeigt (S212),
wobei:
die Anzeigevorrichtung (8) dazu dient, eine Anzeige auszugeben, wenn die Steuereinheit (10) bestimmt, dass die ABS-Steuerung verhindert werden soll; und
die Steuereinheit (10) dazu dient, entsprechend der Fahrzeugkarosseriegeschwindigkeit oder der Raddrehzahl zu bestimmen, dass die ABS-Steuerung verhindert werden soll;
wobei das Überwachungsverfahren durch folgende Schritte gekennzeichnet ist:
Bestimmen, dass die ABS-Steuerung verhindert werden soll, wenn die Fahrzeugkarosseriegeschwindigkeit oder die Raddrehzahl gleich oder kleiner ist als eine vorgegebene Mindestgeschwindigkeit beim ersten Start des Zweirad-Kraftfahrzeugs; und
Bestimmen, dass die ABS-Steuerung verhindert werden soll, wenn die Fahrzeugkarosseriegeschwindigkeit oder die Raddrehzahl gleich oder kleiner ist als eine vorgegebene Mindestgeschwindigkeit nach dem ersten Start des Zweirad-Kraftfahrzeugs.

9. Überwachungsverfahren nach Anspruch 8, wobei das Überwachungsverfahren Folgendes umfasst:
Betätigen der Anzeigevorrichtung (8), indem bewirkt wird, dass sie aufleuchtet, dass sie blinkt (S212) oder dass sie ihre Anzeigefarbe ändert, wenn sie leuchtet oder blinkt.

10. Überwachungsverfahren nach Anspruch 8, wobei die vorgegebene Mindestgeschwindigkeit 0 bis 7 km/h beträgt.

11. Verfahren zur Überwachung einer Raddrehzahl nach Anspruch 8, wobei das Überwachungsverfahren Folgendes umfasst:
Bestimmen, ob ein zusätzliches, einen Zustand der Fahrzeugkarosserie betreffendes Signal einen Stoppzustand des Fahrzeugs anzeigt; und
Bestimmen, dass die ABS-Steuerung ermöglicht wird, wenn das zusätzliche Signal den Stoppzustand des Fahrzeugs anzeigt, auch wenn die Fahrzeugkarosseriegeschwindigkeit oder die Raddrehzahl gleich oder kleiner ist als die vorgegebene Mindestgeschwindigkeit nach dem ersten Start.

12. Verfahren zur Überwachung einer Raddrehzahl nach Anspruch 8, wobei die vorgegebene Mindestgeschwindigkeit, die zum Zeitpunkt des ersten Starts überwacht wird, eine erste Mindestgeschwindigkeit ist, und die vorgegebene Mindestgeschwindigkeit, die nach dem ersten Start überwacht wird, eine zweite Mindestgeschwindigkeit ist, die sich von der ersten Mindestgeschwindigkeit unterscheidet.

13. Verfahren zur Überwachung einer Raddrehzahl nach Anspruch 12, wobei die erste Mindestgeschwindigkeit höher ist als die zweite Mindestgeschwindigkeit.

14. Überwachungsverfahren nach Anspruch 8, wobei die Anzeigevorrichtung (8) eine Warnleuchte ist.

## Revendications

1. Dispositif de surveillance de capteur de vitesse de roue (10) utilisé dans un véhicule à moteur à deux roues, le véhicule à moteur à deux roues comprenant : un capteur de vitesse de roue (2) qui détecte une vitesse de roue d'une roue;
une unité de commande (10) qui trouve une vitesse de carrosserie de véhicule à partir de la vitesse de roue et utilise la vitesse de roue pour effectuer une commande ABS de la roue,
et un indicateur (8) qui indique un état de la commande ABS,
où:
l'indicateur (8) est configuré de manière à donner une notification, lorsque l'unité de commande (10) détermine d'interdire la commande ABS;
l'unité de commande (10) est configurée de manière à déterminer d'interdire la commande ABS en fonction de la vitesse de la carrosserie du véhicule ou de la vitesse des roues;
**caractérisé en ce que**
l'unité de commande (10) décide d'interdire la commande ABS, dans le cas où la vitesse de la carrosserie du véhicule ou la vitesse des roues est égale ou inférieure à une vitesse minimale prédéterminée au démarrage initial du véhicule à moteur à deux roues; et
l'unité de commande (10) décide d'interdire la commande ABS, dans le cas où la vitesse de la carrosserie du véhicule ou la vitesse des roues est égale ou inférieure à une vitesse minimale prédéterminée après le démarrage initial du véhicule à moteur à deux roues.

2. Dispositif de surveillance de capteur de vitesse de roue (10) selon la revendication 1, dans lequel l'unité de commande (10) actionne l'indicateur (8) par tout ce qui le fait s'allumer, le fait clignoter ou changer sa couleur d'indication lorsqu'il est allumé ou clignote.

3. Dispositif de surveillance de capteur de vitesse de roue (10) selon la revendication 1, dans lequel la vitesse minimale prédéterminée est de 0 à 7 km/h.

4. Dispositif de surveillance de capteur de vitesse de roue (10) selon la revendication 1, dans lequel l'unité de commande (10) détermine si un signal supplémentaire relatif à un état de la carrosserie du véhicule indique ou non un état arrêté du véhicule, et dans le cas où le signal supplémentaire indique un état arrêté du véhicule, même si la vitesse de la carrosserie ou la vitesse des roues est égale ou inférieure à la vitesse minimale prédéterminée après le premier démarrage, l'unité de commande (10) détermine d'autoriser la commande ABS.

5. Dispositif de surveillance de capteur de vitesse de roue (10) selon la revendication 1, dans lequel la vitesse minimale prédéterminée surveillée au démarrage initial est une première vitesse minimale et la vitesse minimale prédéterminée surveillée après le démarrage initial est une seconde vitesse minimale différente de la première vitesse minimale.

6. Dispositif de surveillance de capteur de vitesse de roue (10) selon la revendication 5, dans lequel la première vitesse minimale est supérieure à la seconde vitesse minimale.

7. Dispositif de surveillance du capteur de vitesse de roue (10) selon la revendication 1, dans lequel l'indicateur (8) est un témoin lumineux.

8. Procédé de surveillance d'un capteur de vitesse de roue utilisé dans un véhicule à moteur à deux roues, le véhicule à moteur à deux roues comprenant : un capteur de vitesse de roue (2) qui détecte (S203) une vitesse de roue d'une roue;
une unité de commande (10) qui trouve (S203) une vitesse de carrosserie de véhicule à partir de la vitesse de roue et utilise la vitesse de roue pour effectuer une commande ABS de la roue,
et un indicateur (8) qui indique (S212) un état de la commande ABS,
où:
l'indicateur (8) est configuré de manière à donner une notification, lorsque l'unité de commande (10) détermine d'interdire la commande ABS; et
l'unité de commande (10) est configurée de manière à déterminer d'interdire la commande ABS en fonction de la vitesse de la carrosserie du véhicule ou de la vitesse des roues; dans lequel le procédé de surveillance est **caractérisé par**
la détermination d'interdire la commande ABS lorsque la vitesse de la carrosserie du véhicule ou la vitesse des roues est égale ou inférieure à une vitesse minimale prédéterminée au démarrage initial du véhicule à moteur à deux roues; et
la détermination d'interdire la commande ABS, dans le cas où la vitesse de la carrosserie du véhicule ou la vitesse des roues est égale ou inférieure à une vitesse minimale prédéterminée après le démarrage initial du véhicule à moteur à deux roues.

9. Procédé de surveillance selon la revendication 8, dans lequel le procédé de surveillance comprend les étapes consistant à: actionne l'indicateur (8) par tout ce qui le fait s'allumer, le faite clignoter (S212), ou changer sa couleur d'indication lorsqu'il est allumé ou clignote.

10. Procédé de surveillance selon la revendication 8, dans lequel la vitesse minimale prédéterminée est de 0 à 7 km/h.

11. Procédé de surveillance d'un capteur de vitesse de roue selon la revendication 8, dans lequel le procédé de surveillance comprend:
déterminer si un signal supplémentaire relatif à l'état de la carrosserie du véhicule indique ou non un état arrêté du véhicule; et
déterminer d'autoriser la commande ABS, dans le cas où le signal supplémentaire indique l'état arrêté du véhicule, même si la vitesse de la carrosserie ou la vitesse des roues du véhicule est égale ou inférieure à la vitesse minimale prédéterminée après le démarrage initial.

12. Procédé de surveillance d'un capteur de vitesse de roue selon la revendication 8, dans lequel la vitesse minimale prédéterminée surveillée au moment du démarrage initial est une première vitesse minimale et la vitesse minimale prédéterminée surveillée après le démarrage initial est une seconde vitesse minimale différente de la première vitesse minimale.

13. Procédé de surveillance d'un capteur de vitesse de roue selon la revendication 12, dans lequel la première vitesse minimale est supérieure à la seconde vitesse minimale.

14. Procédé de surveillance selon la revendication 8, dans lequel l'indicateur (8) est un témoin lumineux.
